(19) Europäisches Patentamt
European Patent Office
Office européen des brevets

(11) **EP 4 579 790 A1**

(12) **EUROPEAN PATENT APPLICATION**

(43) Date of publication:
**02.07.2025 Bulletin 2025/27**

(21) Application number: **24223245.2**

(22) Date of filing: **24.12.2024**

(51) International Patent Classification (IPC):
*H01M 4/133* (2010.01)    *H01M 4/36* (2006.01)
*H01M 4/587* (2010.01)    *H01M 10/0525* (2010.01)
*H01M 4/02* (2006.01)

(52) Cooperative Patent Classification (CPC):
**H01M 4/587; H01M 4/133; H01M 4/366;**
**H01M 10/0525;** H01M 2004/021; H01M 2004/027

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **28.12.2023 KR 20230195012**

(71) Applicants:
• **SK On Co., Ltd.**
**Seoul 03161 (KR)**
• **SK Innovation Co., Ltd.**
**Seoul 03188 (KR)**

(72) Inventors:
• **EOM, Ki Joo**
**34124 Daejeon (KR)**
• **JANG, Hyun Joong**
**34124 Daejeon (KR)**
• **CHO, Woong Rae**
**34124 Daejeon (KR)**
• **CHOI, Je Nam**
**34124 Daejeon (KR)**

(74) Representative: **Prüfer & Partner mbB**
**Patentanwälte · Rechtsanwälte**
**Sohnckestraße 12**
**81479 München (DE)**

(54) **ANODE FOR LITHIUM SECONDARY BATTERY AND LITHIUM SECONDARY BATTERY INCLUDING THE SAME**

(57) An anode for a lithium secondary battery according to embodiments of the present disclosure includes an anode current collector, a first anode active material layer formed on at least one surface of the anode current collector and including first pores, a second anode active material layer formed on the first anode active material layer and including artificial graphite and second pores, wherein a difference between the first pore aspect ratio and the second pore aspect ratio is 0.5 to 3.0.

[FIG. 1]

**Description**

[BACKGROUND OF THE INVENTION]

1. Field of the Invention

The disclosure of the present application relates to an anode for a lithium secondary battery and a lithium secondary battery including the same.

2. Description of the Related Art

A secondary battery is a battery which can be repeatedly charged and discharged. With rapid progress of information and communication, and display industries, the secondary battery has been widely applied to various portable electronic telecommunication devices such as a camcorder, a mobile phone, a laptop computer as a power source thereof. Recently, a battery pack including the secondary battery has also been developed and applied to an eco-friendly automobile such as an electric vehicle, etc., as a power source thereof.

Examples of the secondary battery may include a lithium secondary battery, a nickelcadmium battery, a nickel-hydrogen battery and the like. Among them, the lithium secondary battery has a high operating voltage and a high energy density per unit weight, and is advantageous in terms of a charging speed and light weight, such that development thereof has been proceeded in this regard.

Recently, as subjects, to which the lithium secondary battery is applied, are expanded, development for a lithium secondary battery having a higher capacity and output has been proceeded. For example, a silicon-based material with a high capacity can be included in the anode active material.

However, lifespan characteristics of an electrode during fast charging may be decreased due to a volume expansion rate and low conductivity of silicon.

[SUMMARY OF THE INVENTION]

According to an aspect of the present disclosure, it is an object to provide an anode for a lithium secondary battery having improved lifespan characteristics.

According to an aspect of the present disclosure, it is another object to provide a lithium secondary battery which includes the anode having improved lifespan characteristics.

To achieve the above objects, according to an aspect of the present invention, there is provided an anode for a lithium secondary battery including: an anode current collector; a first anode active material layer formed on at least one surface of the anode current collector and comprising first pores; and a second anode active material layer formed on the first anode active material layer and comprising artificial graphite and second pores, wherein a difference between a first pore aspect ratio defined by Equation 1 below and a second pore aspect ratio defined by Equation 2 below is 0.5 to 3.0:

$$[\text{Equation 1}]$$

$$\text{First pore aspect ratio} = PZ1/PX1$$

$$[\text{Equation 2}]$$

$$\text{Second pore aspect ratio} = PZ2/PX2.$$

In Equations 1 and 2, PX1 is a ratio of a length in a first direction of the first pore to a sum of the length in the first direction, a length in a second direction perpendicular to the first direction on a plane and a length in a third direction perpendicular to the first direction and the second direction, which are measured through 3D X-ray microscopy (XRM) for the first anode active material layer.

PZ1 is a ratio of the length in the third direction of the first pore to the sum of the length in the first direction, the length in the second direction, and the length in the third direction, which are measured through the XRM for the first anode active material layer.

PX2 is a ratio of a length in the first direction of the second pore to a sum of the length in the first direction, a length in the second direction, and a length in the third direction, which are measured through the XRM for the second anode active material layer.

PZ2 is a ratio of the length in the third direction of the second pore to the sum of the length in the first direction, the length in the second direction, and the length in the third direction, which are measured through the XRM for the second anode active material layer.

In some embodiments, a difference between the first pore aspect ratio and the second pore aspect ratio may be 1.0 to 2.5.

In some embodiments, the second pore aspect ratio may be greater than the first pore aspect ratio.

In some embodiments, the first direction may represent an extension direction of a longer side of the anode when observed in a planar direction, the second direction may represent an extension direction of a shorter side of the anode when observed in the planar direction, and the third direction may represent a thickness direction of the anode.

In some embodiments, the first anode active material layer may include a plurality of first pores, and the second anode active material layer may include a plurality of second pores.

In some embodiments, the first pore aspect ratio may be an average of the first pore aspect ratios of each of the plurality of first pores, and the second pore aspect ratio may be an average of the second pore aspect ratios of each of the plurality of second pores.

In some embodiments, a ratio of a second porosity of the second anode active material layer defined by Equation 4 below to a first porosity of the first anode active material layer defined by Equation 3 below may be 1.2 to 2.0:

[Equation 3]

$$\text{First porosity (\%)} = (VP1/VL1) \times 100$$

[Equation 4]

$$\text{Second porosity (\%)} = (VP2/VL2) \times 100.$$

In Equations 3 and 4, VL1 is a volume of the first anode active material layer, VP1 is a total volume of the plurality of first pores, VL2 is a volume of the second anode active material layer, VP2 is a total volume of the plurality of second pores.

In some embodiments, the first porosity may be 15% to 25%.

In some embodiments, the second porosity may be 25% to 40%.

In some embodiments, the first anode active material layer may include natural graphite.

In some embodiments, the natural graphite may include a carbon coating formed on a surface portion thereof.

In some embodiments, the carbon coating may include amorphous carbon.

In some embodiments, a first Raman peak height ratio of the first anode active material layer defined by Equation 5 below may be 2.5 to 3.6 times a second Raman peak height ratio of the second anode active material layer defined by Equation 6 below:

[Equation 5]

$$\text{First Raman peak height ratio} = ID1/IG1$$

[Equation 6]

$$\text{Second Raman peak height ratio} = ID2/IG2.$$

In Equations 5 and 6, ID1 is a maximum height of a peak in a wavenumber range of 1300 $cm^{-1}$ to 1500 $cm^{-1}$ in a Raman spectrum of the first anode active material layer, IG1 is a maximum height of a peak in a wavenumber range of 1500 $cm^{-1}$ to 1700 $cm^{-1}$ in the Raman spectrum of the first anode active material layer, ID2 is a maximum height of a peak in the wavenumber range of 1300 $cm^{-1}$ to 1500 $cm^{-1}$ in a Raman spectrum of the second anode active material layer, and IG2 is a maximum height of a peak in the wavenumber range of 1500 $cm^{-1}$ to 1700 $cm^{-1}$ in the Raman spectrum of the second anode active material layer.

In some embodiments, the first Raman peak height ratio may be 0.25 to 0.6.

In some embodiments, the second Raman peak height ratio may be 0.03 to 0.2.

According to another aspect of the present invention, there is provided a lithium secondary battery including: the above-described anode for a lithium secondary battery; and a cathode disposed to face the anode.

According to an embodiment of the present disclosure, the structural stability, lifespan characteristics, and fast charging performance of the anode for a lithium secondary battery may be improved. In addition, costs may be reduced.

According to an embodiment of the present disclosure, the structural stability and the fast charging lifespan characteristics may be improved together. In addition, an energy density of the secondary battery may be improved or maintained.

The anode for a lithium secondary battery of the present disclosure and the lithium secondary battery including the same may be widely applied to green technology fields such as an electric vehicle, and a battery charging station, as well as other solar power generation and wind power generation using the batteries. The anode for a lithium secondary battery of the present disclosure and the lithium secondary battery including the same may be used in an eco-friendly electric vehicle, and a hybrid vehicle, etc., which are intended to prevent climate change by suppressing air pollution and greenhouse gas emissions.

[BRIEF DESCRIPTION OF THE DRAWINGS]

The above and other objects, features and other advantages of the present invention will be more clearly understood from the following detailed description taken in conjunction with the accompanying drawings, in which:

> FIG. 1 is a schematic cross-sectional view illustrating an anode for a lithium secondary battery according to exemplary embodiments; and
> FIGS. 2 and 3 are a schematic plan view and a cross-sectional view illustrating a lithium secondary battery according to exemplary embodiments, respectively.

[DETAILED DESCRIPTION OF THE INVENTION]

Embodiments of the present disclosure provide an anode for a lithium secondary battery (hereinafter, may be abbreviated as an "anode") including a plurality of anode active material layers. In addition, a lithium secondary battery (hereinafter, may be abbreviated as a "secondary battery") including the anode is provided.

Hereinafter, embodiments of the present disclosure will be described in detail. However, these embodiments are merely an example, and the present disclosure is not limited to the specific embodiments described as the example.

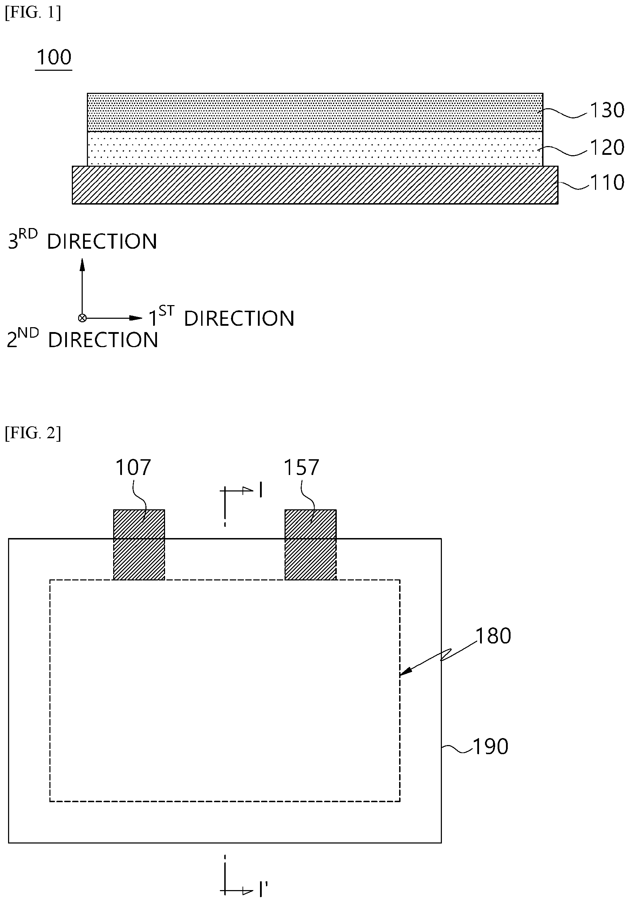

FIG. 1 is a schematic cross-sectional view illustrating an anode for a lithium secondary battery according to exemplary embodiments.

Referring to FIG. 1, an anode 100 may include an anode current collector 110, a first anode active material layer 120 and a second anode active material layer 130.

For example, the anode current collector 110 may include a copper foil, a nickel foil, a stainless steel foil, a titanium foil, a nickel foam, a copper foam, a polymer substrate coated with a conductive metal and the like. These may be used alone or in combination of two or more thereof. For example, the anode current collector 110 may have a thickness of 10 to 50 $\mu$m.

The anode current collector 110 may include the first anode active material layer 120 including first pores formed on at least one surface thereof.

In some embodiments, the first anode active material layer 120 may include natural graphite. Accordingly, adhesion and capacity characteristics between the anode current collector 110 and the first anode active material layer 120 may be improved.

In one embodiment, the first anode active material layer 120 may be formed on the anode current collector 110 to be in direct contact therewith.

A content of the natural graphite based on a total weight of the first anode active material layer 120 may be 40% by weight ("wt%") or more, 50 wt% or more, 60 wt% or more, 70 wt% or more, 80 wt% or more, or 90 wt% or more.

The content of the natural graphite based on the total weight of the first anode active material layer 120 may be 99 wt% or less, 95 wt% or less, 90 wt% or less, or 85 wt% or less.

In one embodiment, an anode active material included in the first anode active material layer 120 may be substantially composed of natural graphite.

In exemplary embodiments, the second anode active material layer 130 including artificial graphite and second pores may be formed on the first anode active material layer 120. Accordingly, the lifespan characteristics and fast charging performance of the anode 100 may be improved.

In one embodiment, the second anode active material layer 130 may be formed on the first anode active material layer 120 to be in direct contact therewith.

A content of the artificial graphite based on a total weight of the second anode active material layer 130 may be 40 wt% or more, 50 wt% or more, 60 wt% or more, 70 wt% or more, 80 wt% or more, or 90 wt% or more.

The content of the artificial graphite based on the total weight of the second anode active material layer 130 may be 99 wt% or less, 95 wt% or less, 90 wt% or less, or 85 wt% or less.

In one embodiment, the anode active material included in the second anode active material layer 130 may be substantially composed of artificial graphite.

In some embodiments, at least one of the first anode active material layer 120 and the second anode active material layer 130 may further include a silicon-based active material. Accordingly, the capacity characteristics of the secondary battery may be improved.

For example, the silicon-based active material may include Si, $SiO_x$ (0<x<2), metal-doped $SiO_x$ (0<x<2), a silicon-carbon composite, etc. The metal may include lithium and/or magnesium, and the metal-doped $SiO_x$ (0<x<2) may include a metal silicate.

According to an embodiment, the silicon-based active material may not be included in the first anode active material layer 120, and the silicon-based active material may be included in the second anode active material layer 130. Accordingly, the lifespan characteristics may be maintained or improved while improving the capacity characteristics of the secondary battery.

In some embodiments, the first anode active material layer 120 and the second anode active material layer 130 may include different anode active materials from each other.

For example, the anode 100 may include the first anode active material layer 120 including natural graphite and the second anode active material layer 130 including artificial graphite, thereby improving the structural stability, lifespan characteristics, and fast charging performance, as well as reducing costs.

In exemplary embodiments, a difference between a first pore aspect ratio defined by Equation 1 below and a second pore aspect ratio defined by Equation 2 below may be 0.5 to 3.0, and in some embodiments, 1.0 to 2.5.

[Equation 1]

$$\text{First pore aspect ratio} = PZ1/PX1$$

[Equation 2]

$$\text{Second pore aspect ratio} = PZ2/PX2$$

In Equations 1 and 2, PX1 is a ratio of a length in a first direction of the first pore to a sum of the length in the first direction, a length in a second direction perpendicular to the first direction on a plane and a length in a third direction perpendicular to the first direction and the second direction, which are measured through 3D X-ray microscopy (XRM) for the first anode active material layer 120.

PZ1 is a ratio of the length in the third direction of the first pore to the sum of the length in the first direction, the length in the second direction, and the length in the third direction, which are measured through the XRM for the first anode active material layer 120.

PX2 is a ratio of a length in the first direction of the second pore to a sum of the length in the first direction, a length in the second direction, and a length in the third direction, which are measured through the XRM for the second anode active material layer 130.

PZ2 is a ratio of the length in the third direction of the second pore to the sum of the length in the first direction, the length in the second direction, and the length in the third direction, which are measured through the XRM for the second anode active material layer 130.

The term "first direction" as used herein may represent an extension direction of a longer side of the anode 100 when observed in a planar direction and/or the first direction shown in FIG. 1.

The term "second direction" as used herein may represent an extension direction of a shorter side of the anode 100 when observed in the planar direction. The second direction may refer to a direction perpendicular to the first direction on the same plane and/or the second direction shown in FIG. 1.

The term "third direction" as used herein may represent a direction perpendicular to the first direction and the second direction, a thickness direction of the anode 100, and/or the third direction shown in FIG. 1.

The first pore aspect ratio may be a ratio of the length in the third direction to the length in the first direction of the first pore included in the first anode active material layer 120.

The second pore aspect ratio may be a ratio of the length in the third direction to the length in the first direction of the second pore included in the second anode active material layer 130.

When a difference between the first pore aspect ratio and the second pore aspect ratio is within the above range, the structural stability improvement by the first anode active material layer 120 and the fast charging characteristics and output characteristics improvement by the second anode active material layer 130 may be implemented together within an appropriate range.

If the difference between the first pore aspect ratio and the second pore aspect ratio exceeds 3.0, the energy density and lifespan characteristics of the second anode active material layer 130 may be decreased.

If the difference between the first pore aspect ratio and the second pore aspect ratio is less than 0.5, the adhesion and stability of the first anode active material layer 120 may be decreased.

For example, 3D modeling images of the anode active material layers 120 and 130 samples may be acquired using the XRM. The 3D modeling image may be analyzed using analysis software to measure the first pore aspect ratio and the second pore aspect ratio.

For example, the first pore aspect ratio may be measured in a region spaced apart from the anode current collector 110 of the first anode active material layer 120 by about 10 $\mu$m or more. For example, the second pore aspect ratio may be measured in a region spaced apart from the outermost surface of the second anode active material layer 130 by about 10 $\mu$m or more. Accordingly, the accuracy of the measurement may be improved and the reliability may be enhanced.

In some embodiments, the second pore aspect ratio may be greater than the first pore aspect ratio. Accordingly, the fast charging lifespan characteristics may be improved by including a shape in which the second pore is sufficiently oriented in the thickness direction (e.g., the third direction) of the anode 100. In this case, the difference between the first pore aspect ratio and the second pore aspect ratio may be a value obtained by subtracting the first pore aspect ratio from the second pore aspect ratio.

In some embodiments, the first anode active material layer 120 may include a plurality of first pores, and the second anode active material layer 130 may include a plurality of second pores.

For example, the above-described first pore aspect ratio may be an average of the first pore aspect ratio values measured through the XRM for each of the plurality of first pores. For example, the above-described second pore aspect ratio may be an average of the second pore aspect ratio values measured through the XRM for each of the plurality of second pores.

In some embodiments, a ratio of a second porosity of the second anode active material layer 130 defined by Equation 4 below to a first porosity of the first anode active material layer 120 defined by Equation 3 may be 1.2 to 2.0, and in some embodiments, 1.4 to 1.8.

[Equation 3]

$$\text{First porosity (\%)} = (VP1/VL1) \times 100$$

[Equation 4]

$$\text{Second porosity (\%)} = (VP2/VL2) \times 100$$

In Equations 3 and 4, VL1 is a volume of the first anode active material layer 120, VP1 is a total volume of the plurality of first pores, VL2 is a volume of the second anode active material layer 130, and VP2 is a total volume of the plurality of second pores.

For example, these VL1, VP 1, VL2 and VP2 may be measured through the XRM.

For example, the VL1 may be a total volume of the first anode active material layer 120 including the total volume of the plurality of first pores, and the VL2 may be a total volume of the second anode active material layer 130 including the total volume of the plurality of second pores.

Within the above porosity range, the structural stability improvement by the first anode active material layer 120 and fast charging characteristics and the output characteristics improvement by the second anode active material layer 130 may be implemented together within an appropriate range.

For example, the second anode active material layer 130 has a greater porousness than the first anode active material layer 120, such that the structural stability and fast charging lifespan characteristics may be improved together and the energy density may be improved or maintained.

For example, 3D modeling images of the anode active material layers 120 and 130 samples may be acquired using the XRM. The first porosity and the second porosity may be measured by analyzing the 3D modeling images using analysis software.

For example, the first porosity may be measured in a region spaced apart from the anode current collector 110 of the first anode active material layer 120 by about 10 $\mu$m or more. For example, the second porosity may be measured in a region spaced apart from the outermost surface of the second anode active material layer 130 by about 10 $\mu$m or more. Accordingly, the accuracy of the measurement may be improved and the reliability may be enhanced.

In some embodiments, the first porosity may be 15% to 25%. Within the above range, the adhesion between the first anode active material layer 120 and the anode current collector 110 may be improved, as well as the capacity characteristics may be maintained or improved.

In some embodiments, the second porosity may be 25% to 40%. Within the above range, the fast charging performance and output characteristics of the second anode active material layer 130 may be improved, as well as the energy density may be maintained or improved.

In some embodiments, the natural graphite included in the first anode active material layer 120 may include a carbon coating formed on a surface portion thereof. Accordingly, the output characteristics and lifespan characteristics of the anode 100 may be improved.

According to an embodiment, the carbon coating may include amorphous carbon. Thereby, the structural stability of the natural graphite may be further improved.

In some embodiments, a first Raman peak height ratio of the first anode active material layer 120 defined by Equation 5 below may be 2.5 to 3.6 times a second Raman peak height ratio of the second anode active material layer 130 defined by Equation 6 below. Within the above range, amorphous characteristics of the first anode active material layer 120 and the second anode active material layer 130 may be appropriately adjusted, thereby improving the lifespan characteristics, fast charging characteristics and output characteristics.

[Equation 5]

First Raman peak height ratio = ID1/IG1

[Equation 6]

Second Raman peak height ratio = ID2/IG2

In Equations 5 and 6, ID1 is a maximum height of a peak in a wavenumber range (e.g., D band of Raman spectrum) of 1300 cm$^{-1}$ to 1500 cm$^{-1}$ in a Raman spectrum of the first anode active material layer 120. IG1 is a maximum height of a peak in a wavenumber range (e.g., G band of Raman spectrum) of 1500 cm$^{-1}$ to 1700 cm$^{-1}$ in the Raman spectrum of the first anode active material layer 120. ID2 is a maximum height of a peak in the wavenumber range of 1300 cm$^{-1}$ to 1500 cm$^{-1}$ in a Raman spectrum of the second anode active material layer 130. IG2 is a maximum height of a peak in the wavenumber range of 1500 cm$^{-1}$ to 1700 cm$^{-1}$ in the Raman spectrum of the second anode active material layer 130.

For example, the first and second Raman peak height ratios may indicate a degree of amorphousness. For example, the higher the first and second Raman peak height ratios, the higher the amorphousness of the first and second anode active material layers 120 and 130.

In some embodiments, the first Raman peak height ratio may be 0.25 to 0.6. Within the above range, an excessive decrease in crystallinity may be suppressed while suppressing an occurrence of cracks in the first anode active material layer 120.

In some embodiments, the second Raman peak height ratio may be 0.03 to 0.2. Within the above range, stability may be improved while reducing a resistance of the anode 100.

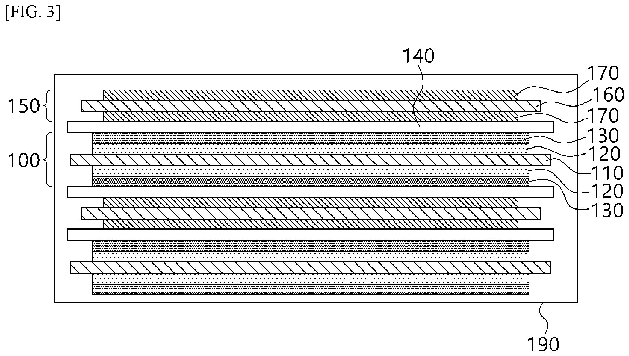

FIGS. 2 and 3 are a schematic plan view and a cross-sectional view of a lithium secondary battery according to exemplary embodiments, respectively. For example, FIG. 3 is a cross-sectional view taken on line I-I' of FIG. 2 in the thickness direction of the battery.

The structures illustrated in FIGS. 2 and 3 are an example for the convenience of description, and the structure of the lithium secondary battery according to the embodiments of the present disclosure is not limited thereto.

The lithium secondary battery may include the above-described anode 100 and a cathode 150 disposed to face the anode 100.

The cathode 150 may include a cathode current collector 160, and a cathode active material layer 170 formed on at least one surface of the cathode current collector 160.

The cathode current collector 160 may include stainless steel, nickel, aluminum, titanium or an alloy thereof. The cathode current collector 160 may also include aluminum or stainless steel subjected to surface treatment with carbon, nickel, titanium or silver. For example, the cathode current collector 160 may have a thickness of 10 to 50 μm.

The cathode active material layer 170 may include a cathode active material. The cathode active material may include a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or crystal structure represented by Formula 1 below.

[Equation 1]     $Li_xNi_aM_bO_{2+z}$

In Formula 1, x, a, b and z may be in a range of $0.9 \leq x \leq 1.2$, $0.5 \leq a \leq 0.99$, $0.01 \leq b \leq 0.5$, $-0.5 \leq z \leq 0.1$, respectively. As described above, M may include Co, Mn and/or Al.

The chemical structure represented by Formula 1 indicates a bonding relationship between elements included in the layered structure or crystal structure of the cathode active material, and does not exclude other additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing introduction and substitution of the additional elements.

In one embodiment, the cathode active material may further include auxiliary elements which are added to the main active elements, thus to enhance chemical stability thereof or the layered structure/crystal structure. The auxiliary element may be incorporated into the layered structure/crystal structure together to form a bond, and it should be understood that this case is also included within the chemical structure range represented by Formula 1.

The auxiliary element may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Sr, Ba, Ra, P or Zr. The auxiliary element may also act as an auxiliary active element which contributes to the capacity/output activity of the cathode active material together with Co or Mn like Al.

For example, the cathode active material or the lithium-nickel metal oxide may include a layered structure or crystal structure represented by Formula 1-1 below.

[Equation 1-1]     $Li_xNi_aM1_{b1}M2_{b2}O_{2+z}$

In Formula 1-1, M1 may include Co, Mn and/or Al. M2 may include the above-described auxiliary elements. In Formula 1-1, x, a, b1, b2 and z may be in arange of $0.9 \leq x \leq 1.2$, $0.5 \leq a \leq 0.99$, $0.01 \leq b1+b2 \leq 0.5$, $-0.5 \leq z \leq 0.1$, respectively.

The cathode active material may further include a coating element or a doping element. For example, elements which are substantially the same as or similar to the above-described auxiliary elements may be used as the coating element or the doping element. For example, the above-described elements may be used alone or in combination of two or more thereof as the coating element or the doping element.

The coating element or the doping element may exist on the surface of the lithium-nickel metal oxide particles, or may penetrate through the surface of the lithium-nickel metal composite oxide particles to be included in the bonding structure represented by the Formula 1 or Formula 1-1 above.

The cathode active material may include a nickel-cobalt-manganese (NCM)-based lithium oxide. In this case, an NCM-based lithium oxide with an increased content of nickel may be used.

Ni may be provided as a transition metal related to the output and capacity of the lithium secondary battery. Therefore, as described above, by employing a high-Ni composition in the cathode active material, a high-capacity cathode and a high-capacity lithium secondary battery may be provided.

However, as the content of Ni is increased, long-term storage stability and life-span stability of the cathode or the secondary battery may be relatively decreased, and a side reaction with the electrolyte may also be increased. However, according to exemplary embodiments, the life-span stability and capacity retention characteristics may be improved through Mn while maintaining electrical conductivity by including Co.

The content of Ni (e.g., a mole fraction of nickel based on the total moles of nickel, cobalt and manganese) in the NCM-based lithium oxide may be 0.5 or more, 0.6 or more, 0.7 or more, or 0.8 or more. In some embodiments, the content of Ni may be 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., $LiFePO_4$).

In some embodiments, the cathode active material may include, for example, a Li-rich layered oxide (LLO)/over-lithiated oxide (OLO)-based active material, an Mn-rich active material, a Co-less active material, and the like, which have a chemical structure or crystal structure represented by Formula 2 below. These may be used alone or in combination of two or more thereof.

[Equation 2]     $p[Li_2MnO_3] \cdot (1-p)[Li_qJO_2]$

In Formula 2, p and q are in a range of $0<p<1$, $0.9 \leq q \leq 1.2$, respectively, and J may include at least one element selected from the group consisting of Mn, Ni, Co, Fe, Cr, V, Cu, Zn, Ti, Al, Mg and B.

The cathode active material may be mixed in a solvent to prepare a cathode slurry. The cathode slurry may be applied to at least one surface of the cathode current collector 160, followed by drying and pressing the same to prepare the cathode active material layer 170. The coating may include a method such as gravure coating, slot die coating, simultaneous multilayer die coating, imprinting, doctor blade coating, dip coating, bar coating or casting. The cathode active material layer 170 may further include a binder, and optionally further include a conductive material, a thickener or the like.

As the solvent, N-methyl-2-pyrrolidone (NMP), dimethylformamide, dimethylacetamide, N,N-dimethylaminopropylamine, ethylene oxide, tetrahydrofuran, and the like may be used.

The binder may include polyvinylidene fluoride (PVDF), poly(vinylidene fluoride-co-hexafluoropropylene), polyacrylonitrile, polymethylmethacrylate, acrylonitrile butadiene rubber (NBR), polybutadiene rubber (BR), styrene-butadiene rubber (SBR) and the like. These may be used alone or in combination of two or more thereof.

In one embodiment, a PVDF-based binder may be used as the cathode binder. In this case, the amount of binder for forming the cathode active material layer 170 may be decreased and the amount of the cathode active material may be relatively increased. Accordingly, the output characteristics and capacity characteristics of the secondary battery may be improved.

The conductive material may be added to the cathode active material layer 170 in order to enhance the conductivity thereof and/or the mobility of lithium ions or electrons. For example, the conductive material may include a carbon-based conductive material such as graphite, carbon black, acetylene black, Ketjen black, graphene, carbon nanotubes (CNTs), vapor-grown carbon fibers (VGCFs), carbon fibers, and/or a metal-based conductive material including tin, tin oxide, titanium oxide, or a perovskite material such as $LaSrCoO_3$, and $LaSrMnO_3$. These may be used alone or in combination of two or more thereof.

The cathode slurry may further include a thickener and/or dispersant. In one embodiment, the cathode slurry may include a thickener such as carboxymethyl cellulose (CMC).

The first anode active material layer 120 may be formed on at least one surface of the anode current collector 110, and the second anode active material layer 130 may be formed on the first anode active material layer 120.

The above-described first anode active material may be mixed in a solvent to prepare a first anode slurry. The first anode slurry may be applied/deposited to at least one surface of the anode current collector 110, followed by drying and pressing the same to prepare the first anode active material layer 120. The coating may include a method such as gravure coating, slot die coating, simultaneous multilayer die coating, imprinting, doctor blade coating, dip coating, bar coating or casting.

The above-described second anode active material may be mixed in a solvent to prepare a second anode slurry. The second anode slurry may be applied/deposited to the first anode active material layer 120, followed by drying and pressing the same to prepare the second anode active material layer 130. The coating may be performed using substantially the same type of method as the above-described coating method of the first anode active material layer 120.

The first and second anode active material layers 120 and 130 may further include a binder, and optionally further include a conductive material, a thickener or the like.

The solvent included in the anode slurry may include water, pure water, deionized water, distilled water, ethanol, isopropanol, methanol, acetone, n-propanol, t-butanol and the like. These may be used alone or in combination of two or more thereof.

The above-described materials that can be used when manufacturing the cathode 150 as the binder, conductive material and thickener may be used.

In some embodiments, a styrene-butadiene rubber (SBR)-based binder, carboxymethyl cellulose (CMC), polyacrylic acid-based binder, poly(3,4-ethylenedioxythiophene, PEDOT)-based binder, and the like may be used as an anode binder. These may be used alone or in combination of two or more thereof.

In exemplary embodiments, a separator 140 may be interposed between the cathode 150 and the anode 100. The separator 140 may be configured to prevent an electrical short-circuit between the cathode 150 and the anode 100, and to allow a flow of ions to occur. For example, the separator 140 may have a thickness of 10 $\mu$m to 20 $\mu$m.

For example, the separator 140 may include a porous polymer film or a porous nonwoven fabric.

The porous polymer film may include a polyolefin polymer such as an ethylene polymer, a propylene polymer, an ethylene/butene copolymer, an ethylene/hexene copolymer, and an ethylene/methacrylate copolymer, etc. These may be used alone or in combination of two or more thereof.

The porous nonwoven fabric may include glass fibers having a high melting point, polyethylene terephthalate fibers and the like.

The separator 140 may also include a ceramic-based material. For example, inorganic particles may be applied to the polymer film or dispersed within the polymer film to improve heat resistance.

The separator 140 may have a single-layer or multi-layer structure including the above-described polymer film and/or non-woven fabric.

According to exemplary embodiments, an electrode cell is defined by the cathode 150, the anode 100, and the separator 140, and a plurality of electrode cells are stacked to form, for example, a jelly roll type electrode assembly 180.

For example, the electrode assembly 180 may be formed by winding, stacking, z-folding, stack-folding, etc. of the separator 140.

The electrode assembly 180 may be housed in a case 190 together with an electrolyte to define a lithium secondary battery. According to exemplary embodiments, a non-aqueous electrolyte may be used as the electrolyte.

The non-aqueous electrolyte includes a lithium salt of an electrolyte and an organic solvent, the lithium salt is represented by, for example, $Li^+X^-$, and as an anion ($X^-$) of the lithium salt, $F^-$, $Cl^-$, $Br^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$, etc. may be exemplified.

As the organic solvent, for example, propylene carbonate (PC), ethylene carbonate (EC), butylene carbonate, diethyl carbonate (DEC), dimethyl carbonate (DMC), ethyl methyl carbonate (EMC), methylpropyl carbonate, ethylpropyl carbonate, dipropyl carbonate, vinylene carbonate, methyl acetate (MA), ethyl acetate (EA), n-propylacetate (n-PA), 1,1-dimethylethyl acetate (DMEA), methyl propionate (MP), ethyl propionate (EP), fluoroethyl acetate (FEA), difluoroethyl acetate (DFEA), trifluoroethyl acetate (TFEA), dibutyl ether, tetraethylene glycol dimethyl ether (TEGDME), diethylene glycol dimethyl ether (DEGDME), dimethoxyethane, tetrahydrofuran (THF), 2-methyltetrahydrofuran, ethyl alcohol, isopropyl alcohol, dimethyl sulfur oxide, acetonitrile, dimethoxyethane, diethoxyethane, sulfolane, gamma-butyrolactone, and propylene sulfite, and the like may be used. These may be used alone or in combination of two or more thereof.

The non-aqueous electrolyte may further include an additive. The additive may include, for example, a cyclic carbonate compound, a fluorine-substituted carbonate compound, a sultone compound, a cyclic sulfate compound, a cyclic sulfite compound, a phosphate compound, a borate compound and the like. These may be used alone or in combination of two or more thereof.

The cyclic carbonate compound may include vinylene carbonate (VC), vinyl ethylene carbonate (VEC), etc.

The fluorine-substituted cyclic carbonate compound may include fluoroethylene carbonate (FEC), etc.

The sultone compound may include 1,3-propane sultone, 1,3-propene sultone, 1,4-butane sultone, etc.

The cyclic sulfate compound may include 1,2-ethylene sulfate, 1,2-propylene sulfate, etc.

The cyclic sulfite compound may include ethylene sulfite, butylene sulfite, etc.

The phosphate compound may include lithium difluoro bis-oxalato phosphate, lithium difluoro phosphate, etc.

The borate compound may include lithium bis(oxalate) borate, etc.

In some embodiments, a solid electrolyte may be used instead of the above-described non-aqueous electrolyte. In this case, the lithium secondary battery may be manufactured in the form of an all-solid-state battery. In addition, a solid electrolyte layer may be disposed between the cathode 150 and the anode 100 instead of the above-described separator 140.

The solid electrolyte may include a sulfide-based electrolyte. As a non-limiting example, the sulfide-based electrolyte may include $Li_2S$-$P_2S_5$, $Li_2S$-$P_2S_5$-LiCl, $Li_2S$-$P_2S_5$-LiBr, $Li_2S$-$P_2S_5$-LiCl-LiBr, $Li_2S$-$P_2S_5$-Li2O, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (m and n are positive numbers, Z is Ge, Zn or Ga), $Li_2S$-$GeS_2$, $Li_2S$-$SiS_2$-$Li_3PO_4$, $Li_2S$-$SiS_2$-$Li_pMO_q$ (p and q are positive numbers, M is P, Si, Ge, B, Al, Ga or In), $Li_7$-$xPS_6$-$xCl_x$ ($0{\leq}x{\leq}2$), $Li_7$-$xPS_6$-$xBr_x$ ($0{\leq}x{\leq}2$), $Li_7$-$xPS_6$-$xI_x$ ($0{\leq}x{\leq}2$), etc. These may be used alone or in combination of two or more thereof.

In one embodiment, the solid electrolyte may include an oxide-based amorphous solid electrolyte, such as, for example, $Li_2O$-$B_2O_3$-$P_2O_5$, $Li_2O$-$SiO_2$, $Li_2O$-$B_2O_3$, $Li_2O$-$B_2O_3$-ZnO, etc.

As shown in FIGS. 2 and 3, electrode tabs (a cathode tab and an anode tab) may protrude from the cathode current collector 160 and the anode current collector 110, respectively, which belong to each electrode cell, and may extend to one side of the case 190. The electrode tabs may be fused together with the one side of the case 190 to form electrode leads (a cathode lead 157 and an anode lead 107) extending or exposed to an outside of the case 190.

The lithium secondary battery may be manufactured, for example, in a cylindrical shape using a can, a square shape, a pouch type or a coin shape.

Hereinafter, experimental examples including specific examples and comparative examples are proposed to facilitate understanding of the present disclosure. However, the following examples are only given for illustrating the present disclosure and those skilled in the art will obviously understand that various alterations and modifications are possible within the scope and spirit of the present disclosure. Such alterations and modifications are duly included in the appended claims.

## Examples 1 to 12, and Comparative Examples 6 and 7

(1) Preparation of anode

1) Preparation of first anode active material layer

A first anode slurry was prepared by mixing 93.4 wt% of natural graphite, 3 wt% of artificial graphite as a conductive material, 2.4 wt% of styrene-butadiene rubber (SBR) as a binder, and 1.2 wt% of carboxymethyl cellulose (CMC) as a thickener.

The first anode slurry was applied to a copper current collector, followed by drying and pressing the same to form a first anode active material layer.

2) Preparation of second anode active material layer

A second anode slurry was prepared by mixing 95.4 wt% of artificial graphite, 3 wt% of artificial graphite as a conductive material, 0.4 wt% of styrene-butadiene rubber (SBR) as a binder, and 1.2 wt% of carboxymethyl cellulose (CMC) as a thickener.

The second anode slurry was applied to the first anode active material layer, followed by drying and pressing the same to form an anode including the second anode active material layer.

Variables such as a pressing time and pressure, and loading amount were comprehensively controlled during formation of the first and second anode active material layers to manufacture anodes respectively having the first pore aspect ratio, the second pore aspect ratio, the first porosity, the second porosity, the first Raman peak height ratio, and the second Raman peak height ratio adjusted as shown in Tables 1 and 2 below.

(2) Manufacturing of lithium (Li) half-cell

A lithium half-cell including the prepared anode and using lithium (Li) metal as a counter electrode (cathode) was manufactured.

Specifically, a lithium coin half-cell of CR2016 (diameter 20 mm, thickness 1.6 mm) standard was manufactured by interposing a separator (polyethylene, thickness 20 $\mu$m) between the prepared anode and lithium metal (thickness 1.6 mm).

A combination of lithium metal/separator/anode was put in a coin cell plate, an electrolyte was injected, and then a cap was covered and clamped. The electrolyte used herein was prepared by adding 2.0 vol % of fluoroethylene carbonate (FEC) based on the total volume of the electrolyte to a 1M LiPF$_6$ solution formed using a mixed solvent of EC/EMC (3:7; volume ratio). The manufactured lithium half-cell was impregnated for 3 to 24 hours after clamping, then 3 cycles of charging and discharging at 0.1C were performed thereon (charging condition: CC-CV 0.1C 0.01 V 0.01C CUT-OFF, discharging condition: CC 0.1C 1.5 V CUT-OFF).

**Comparative Example 1**

An anode and a lithium half-cell were manufactured according to the same procedures as described in Example 1, except that the same amount of artificial graphite was used instead of the natural graphite in the first anode active material layer.

**Comparative Example 2**

An anode and a lithium half-cell were manufactured according to the same procedures as described in Example 1, except that the second anode active material layer was formed directly on the copper current collector without forming the first anode active material layer.

**Comparative Example 3**

An anode and a lithium half-cell were manufactured according to the same procedures as described in Example 1, except that the second anode active material layer was formed directly on the copper current collector without forming the first anode active material layer, and that the same amount of natural graphite was used instead of the artificial graphite in the second anode active material layer.

**Comparative Example 4**

An anode and a lithium half-cell were manufactured according to the same procedures as described in Example 1, except that the same amount of natural graphite was used instead of the artificial graphite in the second anode active material layer.

**Comparative Example 5**

An anode and a lithium half-cell were manufactured according to the same procedures as described in Example 1, except that the same amount of artificial graphite was used instead of the natural graphite in the first anode active material layer, and that the same amount of natural graphite was used instead of the artificial graphite in the second anode active material layer.

**Experimental Example**

(1) Measurement of first pore aspect ratio, second pore aspect ratio, first porosity and second porosity

Anodes manufactured according to the above-described examples and comparative examples were cut to fabricate samples. In the samples, analysis was performed except for an about 10 $\mu$m thickness region adjacent to the copper current collector in the first anode active material layer and an about 10 $\mu$m thickness region adjacent to an outer surface in the second anode active material layer.

The samples were put into XRM (Zeiss Xradia 620 versa, Zeiss) to obtain 3D modeling images.

Measurement conditions of the XRM were as follows.

i) Source condition: 50 kV, 4.5 W

ii) Voxel size: 300 nm

The 3D modeling images were analyzed using analysis software (Matdict Material Characterization, GeoDict Software) to measure the length in the first direction, the length in the second direction, and the length in the third direction of each of the plurality of first pores included in the first anode active material layer and the plurality of second pores included in the second anode active material layer.

Ratios (PX1 and PX2) of the length in the first direction to the sum of the length in the first direction, the length in the second direction, and the length in the third direction were calculated.

Ratios (PZ 1 and PZ2) of the length in the third direction to the sum of the length in the first direction, the length in the second direction, and the length in the third direction were calculated.

The PX1 and PZ1 values of the plurality of first pores were respectively substituted into Equation 1 to calculate first pore aspect ratio values, and a value obtained by averaging the first pore aspect ratio values was evaluated as the first pore aspect ratio.

The PX2 and PZ2 values of the plurality of second pores were respectively substituted into Equation 2 to calculate second pore aspect ratio values, and a value obtained by averaging the second pore aspect ratio values was evaluated as the second pore aspect ratio.

A difference between the first pore aspect ratio and the second pore aspect ratio was converted into an absolute value.

The first porosity of the first anode active material layer and the second porosity of the second anode active material layer were measured by analyzing the 3D modeling image using the analysis software.

A ratio of the second porosity to the first porosity was calculated.

(2) Measurement of first Raman peak height ratio and second Raman peak height ratio

The anodes manufactured according to the above-described examples and comparative examples were cut to fabricate samples.

The second Raman peak height ratio was measured for the second anode active material layer, which is the outermost layer of the sample, using a 532 nm laser Raman analyzer (Laser Raman Spectroscopy) (model name: Invia, manufacturer: RENISHAW).

The specific measurement method of the Raman analyzer was as follows.

i) A power of the Raman analyzer was turned on.

ii) A spectral acquisition setup window was opened.

iii) 'Static' was selected as the Grating Scan Type, and 1000 (Raman Shift ($cm^{-1}$)) was entered as the Center value.

iv) In Configuration, 532 nm edge was selected as the Laser, 1800/mm (vis) as the Grating, and Renishaw 1024 StreamLine CCD as the Detector.

v) In the Acquisition condition setting, Exposure time (/s) was set to 10, Objective to 50, Accumulation to 5, Laser power (/%) to 10, and Scan to 20 times.

vi) After placing the sample on a sample stage and checking a measurement site, the Raman spectrum of the sample was acquired.

In the Raman spectrum above, a peak intensity (ID2) in a band having the wavenumber of 1300 cm$^{-1}$ to 1500 cm$^{-1}$ (e.g., D band) and a peak intensity (IG2) in a band having the wavenumber of 1500 cm$^{-1}$ to 1700 cm$^{-1}$ (e.g., G band) were measured. The measured peak intensities were applied to Equation 6 to calculate the second Raman peak height ratio.

The second anode active material layer was partially removed by repeatedly attaching and detaching a 3M tape to an upper surface of the sample, and the first Raman peak height ratio was measured for the first anode active material layer from which the second anode active material layer was partially removed using the same equipment and method as the measurement of the second Raman peak height ratio.

In the Raman spectrum above, a peak intensity (ID1) in a band having the wavenumber of 1300 cm$^{-1}$ to 1500 cm$^{-1}$ (e.g., D band) and a peak intensity (IG1) in a band having the wavenumber of 1500 cm$^{-1}$ to 1700 cm$^{-1}$ (e.g., G band) were measured. The measured peak intensities were applied to Equation 5 to calculate the first Raman peak height ratio.

It was calculated how many times the first Raman peak height ratio is relative to the second Raman peak height ratio.

(3) Evaluation of capacity retention rate during fast charging

The lithium half-cells manufactured according to the above-described examples and comparative examples were charged at C-rates of 3.25C/3.0C/2.75C/2.5C/2.25C/2.0C/1.75C/1.5C/1.25C/1.0C/0.75C/0.5C in a stepwise charging manner to reach a depth of discharge (DOD) of 77.2% within 20 minutes, and then discharged at 1C. The charging and discharging process was set to be one cycle, and the fast charging evaluation was performed by repeating the cycle. 300 cycles were performed while having a rest time of 10 minutes between charge and discharge cycles, then the discharge capacity after 300 cycles was divided by the discharge capacity after 1 cycle and multiplied by 100 to evaluate the capacity retention rates during rapid charging.

(4) Evaluation of direct current internal resistance (DCIR) increase

Fast charging and discharging were repeatedly performed on the lithium half-cells manufactured according to the above-described examples and comparative examples according to the same procedures as described in Experimental Example (3), and resistance (DCIR) was measured, respectively.

After 1 cycle and 300 cycles, each discharged lithium half-cell was charged according to the fast charging conditions of Experimental Example (3), discharged at 0.3C to reach DOD 50%, and then discharged at 1C for 30 seconds. Resistance (DCIR) was calculated by measuring a voltage (V) decreased for 10 seconds during discharging.

The resistance after 300 cycles was divided by the resistance after 1 cycle and multiplied by 100 to evaluate the resistance increase rate.

Measurement and evaluation results are shown in Tables 1 and 2 below.

[TABLE 1]

| | First pore aspect ratio | Second pore aspect ratio | Difference between first pore aspect ratio and second pore aspect ratio | First pore (%) | Second pore (%) | Ratio of second porosity to first porosity |
|---|---|---|---|---|---|---|
| Example 1 | 3.40 | 4.68 | 1.28 | 20.3 | 28.1 | 1.38 |
| Example 2 | 3.85 | 4.35 | 0.50 | 19.5 | 27.5 | 1.41 |
| Example 3 | 3.10 | 5.33 | 2.13 | 21.2 | 29.7 | 1.40 |
| Example 4 | 2.76 | 5.75 | 2.99 | 21.5 | 29.2 | 1.36 |
| Example 5 | 3.38 | 4.69 | 1.31 | 21.2 | 26.5 | 1.25 |
| Example 6 | 3.35 | 4.65 | 1.30 | 18.7 | 36.8 | 1.97 |
| Example 7 | 3.60 | 5.01 | 1.41 | 24.5 | 28.2 | 1.15 |
| Example 8 | 3.03 | 4.15 | 1.12 | 15.3 | 32.1 | 2.10 |
| Example 9 | 3.37 | 4.72 | 1.35 | 19.9 | 27.1 | 1.36 |
| Example 10 | 3.44 | 4.93 | 1.49 | 22.7 | 31.8 | 1.40 |
| Example 11 | 3.54 | 5.20 | 1.66 | 23.2 | 28.1 | 1.21 |

(continued)

| | First pore aspect ratio | Second pore aspect ratio | Difference between first pore aspect ratio and second pore aspect ratio | First pore (%) | Second pore (%) | Ratio of second porosity to first porosity |
|---|---|---|---|---|---|---|
| Example 12 | 3.58 | 4.55 | 0.97 | 19.6 | 36.5 | 1.86 |
| Comparative Example 1 | 6.00 | 6.00 | 0 | 23.9 | 24.5 | 1.03 |
| Comparative Example 2 | - | 4.34 | - | - | 24.2 | - |
| Comparative Example 3 | - | 3.57 | - | - | 24.2 | - |
| Comparative Example 4 | 3.51 | 3.52 | 0.01 | 20.1 | 20.5 | 1.02 |
| Comparative Example 5 | 4.70 | 3.68 | 1.02 | 29.2 | 20.5 | 0.70 |
| Comparative Example 6 | 3.90 | 4.37 | 0.47 | 20.7 | 29.0 | 1.40 |
| Comparative Example 7 | 2.86 | 5.91 | 3.05 | 16.7 | 33.1 | 1.98 |

[TABLE 2]

| | First Raman peak height ratio | Second Raman peak height ratio | Ratio of first Raman peak height to second Raman peak height | Capacity retention rate during fast charging (%, 300 cyc) | Resistance increase rate (%, 300 cyc) |
|---|---|---|---|---|---|
| Example 1 | 0.32 | 0.09 | 3.6 | 96 | 101 |
| Example 2 | 0.37 | 0.11 | 3.4 | 97 | 100 |
| Example 3 | 0.35 | 0.10 | 3.5 | 96 | 101 |
| Example 4 | 0.25 | 0.07 | 3.6 | 95 | 102 |
| Example 5 | 0.29 | 0.08 | 3.6 | 94 | 101 |
| Example 6 | 0.46 | 0.14 | 3.3 | 95 | 102 |
| Example 7 | 0.28 | 0.09 | 3.1 | 91 | 104 |
| Example 8 | 0.60 | 0.17 | 3.5 | 90 | 104 |
| Example 9 | 0.31 | 0.10 | 3.1 | 95 | 100 |
| Example 10 | 0.35 | 0.14 | 2.5 | 94 | 101 |
| Example 11 | 0.38 | 0.16 | 2.4 | 91 | 104 |
| Example 12 | 0.26 | 0.07 | 3.7 | 91 | 105 |
| Comparative Example 1 | 0.07 | 0.08 | 0.88 | 78 | 111 |
| Comparative Example 2 | - | 0.1 | - | 65 | 105 |
| Comparative Example 3 | - | 0.34 | - | 87 | 118 |
| Comparative Example 4 | 0.35 | 0.33 | 1.1 | 70 | 124 |
| Comparative Example 5 | 0.10 | 0.31 | 0.32 | 83 | 115 |
| Comparative Example 6 | 0.28 | 0.08 | 3.5 | 85 | 107 |
| Comparative Example 7 | 0.39 | 0.15 | 2.6 | 86 | 108 |

Referring to Tables 1 and 2, in the examples where the difference between the first pore aspect ratio and the second pore aspect ratio was 0.5 to 3.0, the fast charging capacity retention rate was improved and the resistance increase rate was reduced compared to the comparative examples.

In examples 7 and 8 where the ratio of the second porosity to the first porosity deviated from 1.2 to 2.0, the fast charging capacity retention rate was relatively reduced and the resistance increase rate was increased.

In examples 11 and 12 where the first Raman peak height ratio deviated from 2.5 to 3.6 times the second Raman peak height ratio, the fast charging capacity retention rate was relatively reduced and the resistance increase rate was increased.

In Comparative Example 1 where only artificial graphite was included in the first anode active material layer and the second anode active material layer, and in Comparative Example 4 where only natural graphite was included in the first anode active material layer and the second anode active material layer, the fast charging capacity retention rate was decreased and the resistance increase rate was increased compared to the examples.

In Comparative Example 5 where artificial graphite was included in the first anode active material layer and natural graphite was included in the second anode active material layer, the fast charging capacity retention rate was decreased and the resistance increase rate was increased compared to the examples.

**Claims**

1. An anode (100) for a lithium secondary battery comprising:

   an anode current collector (110);
   a first anode active material layer (120) formed on at least one surface of the anode current collector (110) and comprising first pores; and
   a second anode active material layer (130) formed on the first anode active material layer (120) and comprising artificial graphite and second pores,
   wherein a difference between a first pore aspect ratio defined by Equation 1 below and a second pore aspect ratio defined by Equation 2 below is 0.5 to 3.0:

   $$[\text{Equation 1}]$$

   $$\text{First pore aspect ratio} = PZ1/PX1$$

   $$[\text{Equation 2}]$$

   $$\text{Second pore aspect ratio} = PZ2/PX2$$

   (in Equations 1 and 2, PX1 is a ratio of a length in a first direction of the first pore to a sum of the length in the first direction, a length in a second direction perpendicular to the first direction on a plane and a length in a third direction perpendicular to the first direction and the second direction, which are measured through 3D X-ray microscopy (XRM) for the first anode active material layer (120),
   PZ1 is a ratio of the length in the third direction of the first pore to the sum of the length in the first direction, the length in the second direction, and the length in the third direction, which are measured through the XRM for the first anode active material layer (120),
   PX2 is a ratio of a length in the first direction of the second pore to a sum of the length in the first direction, a length in the second direction, and a length in the third direction, which are measured through the XRM for the second anode active material layer (130), and
   PZ2 is a ratio of the length in the third direction of the second pore to the sum of the length in the first direction, the length in the second direction, and the length in the third direction, which are measured through the XRM for the second anode active material layer (130)).

2. The anode (100) for a lithium secondary battery according to claim 1, wherein a difference between the first pore aspect ratio and the second pore aspect ratio is 1.0 to 2.5.

3. The anode (100) for a lithium secondary battery according to claim 1 or 2, wherein the second pore aspect ratio is greater than the first pore aspect ratio.

4. The anode (100) for a lithium secondary battery according to one of claims 1 to 3, wherein the first direction represents an extension direction of a longer side of the anode when observed in a planar direction, the second direction represents an extension direction of a shorter side of the anode when observed in the planar direction, and the third direction represents a thickness direction of the anode.

5. The anode (100) for a lithium secondary battery according to one of claims 1 to 4, wherein the first anode active material layer (120) comprises a plurality of first pores, and the second anode active material layer (130) comprises a plurality of second pores.

6. The anode (100) for a lithium secondary battery according to claim 5, wherein the first pore aspect ratio is an average of the first pore aspect ratios of each of the plurality of first pores, and the second pore aspect ratio is an average of the second pore aspect ratios of each of the plurality of second pores.

7. The anode (100) for a lithium secondary battery according to claim 5 or 6, wherein a ratio of a second porosity of the second anode active material layer (130) defined by Equation 4 below to a first porosity of the first anode active material layer (120) defined by Equation 3 below is 1.2 to 2.0:

[Equation 3]

$$\text{First porosity (\%)} = (VP1/VL1) \times 100$$

[Equation 4]

$$\text{Second porosity (\%)} = (VP2/VL2) \times 100$$

(in Equations 3 and 4, VL1 is a volume of the first anode active material layer (120), VP1 is a total volume of the plurality of first pores, VL2 is a volume of the second anode active material layer (130), VP2 is a total volume of the plurality of second pores).

8. The anode (100) for a lithium secondary battery according to claim 7, wherein the first porosity is 15% to 25%.

9. The anode 100 for a lithium secondary battery according to claim 7 or 8, wherein the second porosity is 25% to 40%.

10. The anode (100) for a lithium secondary battery according to one of claims 1 to 9, wherein the first anode active material layer (120) comprises natural graphite.

11. The anode (100) for a lithium secondary battery according to claim 10, wherein the natural graphite comprises a carbon coating formed on a surface portion thereof,
optionally wherein the carbon coating comprises amorphous carbon.

12. The anode (100) for a lithium secondary battery according to one of claims 1 to 11, wherein a first Raman peak height ratio of the first anode active material layer (120) defined by Equation 5 below is 2.5 to 3.6 times a second Raman peak height ratio of the second anode active material layer (130) defined by Equation 6 below:

[Equation 5]

$$\text{First Raman peak height ratio} = ID1/IG1$$

[Equation 6]

$$\text{Second Raman peak height ratio} = ID2/IG2$$

(in Equations 5 and 6, ID1 is a maximum height of a peak in a wavenumber range of 1300 cm$^{-1}$ to 1500 cm$^{-1}$ in a Raman spectrum of the first anode active material layer (120), IG1 is a maximum height of a peak in a wavenumber range of 1500 cm$^{-1}$ to 1700 cm$^{-1}$ in the Raman spectrum of the first anode active material layer (120), ID2 is a maximum height of a peak in the wavenumber range of 1300 cm$^{-1}$ to 1500 cm$^{-1}$ in a Raman spectrum of the second anode active material layer (130), and IG2 is a maximum height of a peak in the wavenumber range of 1500 cm$^{-1}$ to 1700 cm$^{-1}$ in the Raman spectrum of the second anode active material layer (130)).

**13.** The anode (100) for a lithium secondary battery according to claim 12, wherein the first Raman peak height ratio is 0.25 to 0.6.

**14.** The anode (100) for a lithium secondary battery according to claim 12 or 13, wherein the second Raman peak height ratio is 0.03 to 0.2.

**15.** A lithium secondary battery comprising:

the anode (100) for a lithium secondary battery according to one of claims 1 to 14; and
a cathode (150) disposed to face the anode (100).

[FIG. 1]

<u>100</u>

130

120

110

$3^{RD}$ DIRECTION

$1^{ST}$ DIRECTION

$2^{ND}$ DIRECTION

[FIG. 2]

107

157

I

180

190

I'

[FIG. 3]

**EUROPEAN SEARCH REPORT**

Europäisches
Patentamt
European
Patent Office
Office européen
des brevets

Application Number

EP 24 22 3245

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 102 308 943 B1 (LG ENERGY SOLUTIONS CO., LTD.) 1 October 2021 (2021-10-01) | 1-11,15 | INV.<br>H01M4/133 |
| Y | * pages relate to English translation; page 2, paragraph 0009 - page 17, paragraph 0166; figures 1a-2; tables 1, 2 * | 11-14 | H01M4/36<br>H01M4/587<br>H01M10/0525 |
| | ----- | | ADD. |
| Y | CA 3 241 251 A1 (LG ENERGY SOLUTION LTD [KR]) 29 June 2023 (2023-06-29) * page 7, paragraph 0029 - page 15, paragraph 0053; figure 1 * | 11 | H01M4/02 |
| | ----- | | |
| Y | CN 115 207 281 A (NINGDE AMPEREX TECHNOLOGY LTD) 18 October 2022 (2022-10-18) * pages relate to original document; page 5, paragraph 0023 - page 8, paragraph 0055; figure 1 * | 12-14 | |
| | ----- | | |

TECHNICAL FIELDS
SEARCHED       (IPC)

H01M

The present search report has been drawn up for all claims

| Place of search | Date of completion of the search | Examiner |
|---|---|---|
| Munich | 9 May 2025 | Polisski, Sergej |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 22 3245

This annex lists the patent family members relating to the patent documents cited in the above-mentioned European search report.
The members are as contained in the European Patent Office EDP file on
The European Patent Office is in no way liable for these particulars which are merely given for the purpose of information.

09-05-2025

| Patent document cited in search report | Publication date | Patent family member(s) | Publication date |
|---|---|---|---|
| KR 102308943 B1 | 01-10-2021 | NONE | |
| CA 3241251 A1 | 29-06-2023 | CA 3241251 A1 | 29-06-2023 |
| | | CN 118355522 A | 16-07-2024 |
| | | EP 4428943 A1 | 11-09-2024 |
| | | JP 2024542625 A | 15-11-2024 |
| | | KR 20230094817 A | 28-06-2023 |
| | | US 2024322140 A1 | 26-09-2024 |
| | | WO 2023121247 A1 | 29-06-2023 |
| CN 115207281 A | 18-10-2022 | NONE | |